# EUROPEAN PATENT APPLICATION

(11) **EP 0 745 925 A2**
(43) Date of publication of application: **04.12.1996**
(21) Application number: 96303667.8
(22) Date of filing: 22.05.1996
(51) Int. Cl.: G06F 1/00, G06F 12/14

(54) **Encryption key**

(30) Priority: 28.05.1995 IL 11389095
(71) Applicant: T.T.R. Technologies Limited, Immanuel 44845 (IL)
(72) Inventor: Sollish, Baruch, Immanuel 44848 (IL)
(74) Representative: Davies, Gregory Mark

(57) **Abstract**

A system and method for encrypting and decrypting encoded data is provided. The encryption system includes a key generating unit for generating an encryption key from a pattern of marked sectors on a marked randomly accessible removable storage element, such as a marked diskette, and an encoding unit for encoding the data in accordance with the encryption key. The decryption system includes a key generating unit for generating an encryption key from a pattern of marked sectors on a marked storage element and a decryptor for decrypting the encoded data with the encryption key.

## Description

### FIELD OF THE INVENTION

The present invention relates to the field of encryption and especially to a method and system for generating encryption keys from specially marked randomly accessible removable storage elements.

### BACKGROUND OF THE INVENTION

Encryption algorithms are commonly used to conceal the plain text of a message. An algorithm may be kept secure by simply keeping the nature of the algorithm secret. However, the algorithms tend not to remain secret for too long especially if there are a large number of users. Today, encryption algorithms generally use an encryption key to guarantee the security of the encrypted data.

Symmetric algorithms which calculate the encryption key from the decryption key and vice versa, commonly, use the same key for both encryption and decryption. Symmetric algorithms can operate on plain text either in single bits (stream algorithms) or in groups of bits called blocks. For algorithms that are implemented on a computer, it is possible to work on larger block sizes of 8 or more bytes at a time, thereby making the encrypted data more difficult to decipher.

Since the security of an algorithm depends on its key, it is advisable to separate the key from the encrypted file. Otherwise, even though a secure encryption method such as Data Encryption Standard (DES) may be used, if the key is stored with the encrypted file, the key can be easily recovered by someone who knows where to look in the encrypted file. Security considerations also dictate that the generated key should ideally also be a random bit string. An easy to remember text string can, for instance, be crunched into a pseudo random bit string. There are known methods of key generation, such as the ANSI X9.17 standard which uses a DES algorithm which is especially suitable for generating session keys within a system.

The generated key needs to be securely stored for later use. Known methods include the user remembering the key, storing the key in a Read Only Memory (ROM) key or on a magnetic stripe card. Users enter their key into the system by inserting the special key or card attached to the computer. However, the security of the system can be compromised if the ROM key or card is lost for example.

Illegal copying and piracy of software is a major problem within the computer industry. Copy protection mechanisms, which have been developed to prevent software from being illegally copied, are generally software based or involve the attachment of a piece of hardware which acts as a "key".

Software-based schemes include methods such as the encoding of data on the diskette. The software program checks for this data and only functions if the encoded data is found. Though the encoded data is non-copyable by the copying utility found on standard operating systems, other copying tools have been developed which accurately copy the diskette thereby defeating the objective of especially encoding the data.

U.S. Pat. No. 4,584,641 to Guglielmino describes a means for copy protecting disks in which when a copied disk is run, the copied software program is deleted and the disk is unusable. Permanent input/output errors such as the absence of magnetic material are placed on the disk. An error trap routine is also placed on the disk to check for these permanent errors so that the program will only run if they are found.

U.S. Pat. No. 4,577,289 to Comerford et al., similarly describes a method of directly encoding an identifier onto the magnetic medium of a hard disk or floppy diskette. The identifier consists of non-magnetic indicia placed on sections of the diskette that are not modifiable by a conventional medium write process. Indicia are produced over at least one entire track and a verification program on the diskette checks that the marked indicia correspond to a pre-determined pattern. The protected software will only run if the diskettes have been validated. Both the above methods only use the marked patterns to check if the diskettes are genuine.

### SUMMARY OF THE INVENTION

It would be desirable to be able to provide a system and method for generating encryption keys which overcomes the disadvantages of the abovementioned systems and methods. It would also be desirable to be able to protect software using a generated encryption key.

According to the invention there is provided a system for encrypting encoded data which includes a key generating unit for generating an encryption key from a pattern of marked sectors on a marked randomly accessible removable storage element, such as a marked diskette, and an encoding unit for encoding the data in accordance with the encryption key.

Additionally, there is also provided a system for decrypting encoded data which includes a key generating unit for generating an encryption key from a pattern of marked sectors on a marked storage element and a decryptor for decrypting the encoded data with the encryption key.

Furthermore. in accordance with a preferred embodiment of the invention, the key generating unit includes a disk drive for reading from and writing to a diskette, a first memory buffer for storing the contents of a first set of data read by the reading means from at least one of the sectors, a random word generator for randomly generating data. The key generating unit also includes a second memory buffer for storing the contents of the randomly generated data and the complement of the randomly generated data, a sector comparator and a key generator for generating the encryption key from the pattern of marked sectors. The sector comparator compares the results of a first reading of the sectcr after writing the randomly generated data with the results of a second reading of the sector after writing the complement of the randomly generated data for determining whether the at least one of the sectors is one of the marked sectors and for producing the pattern of marked sectors .

Additionally, in accordance with a preferred embodiment of the invention, there is provided a method for encrypting encoded data which includes the step of generating an encryption key from a pattern of marked sectors on a marked randomly accessible removable storage elements, such as a diskette. The marked storage element has two sides, each of the two sides containing a plurality of sectors.

Additionally, in accordance with a preferred embodiment of the invention, there is provided a method for decrypting encoded data which includes the steps of generating an encryption key from a pattern of marked sectors on a marked randomly accessible removable storage element and decrypting the encoded data with the encryption key. The marked diskette has two sides, each of the two sides containing a plurality of sectors.

Furthermore, in accordance with a preferred embodiment of the invention, the step of generating an encryption key includes the steps of validating the marked storage element, storing the location of the marked sectors in a memory storage device, producing a pattern from the marked sectors and generating the encryption key from the pattern of marked sectors.

Additionally, in accordance with a preferred embodiment of the invention, the step of validating includes the steps of determining whether each of the plurality of sectors on each side of the storage element having two sides (such as a diskette) is marked or unmarked and for each marked sector, verifying that the nearest neighbors of the marked sectors is unmarked and verifying that the corresponding sector on the other side of the diskette to the marked sector is unmarked.

Additionally, in accordance with a preferred embodiment of the invention, the step of determining includes the steps of first reading each of the plurality of sectors and storing the read data into a first memory buffer, generating random data and writing the random generated data to the read sector and storing the randomly generated data to a second memory buffer. The step of determining further includes storing the complement of the random generated data to the second memory buffer and a second reading of the read sector. The contents of the second memory buffer is compared with the randomly generated data and if the second memory buffer does not match the randomly generated data, the sector is identified as a marked sector.

Furthermore, in accordance with a preferred embodiment of the invention, there is provided a system for protecting software which includes a key extractor for generating a decryption key from a pattern of marked sectors on a marked storage element, and a software decryptor for decrypting the software using the decryption key.

Furthermore, in accordance with a preferred embodiment of the invention, there is provided a method for protecting software which include the steps of generating a decryption key from a pattern of marked sectors on a marked diskette having two sides, each of the two sides containing a plurality of sectors and decrypting the software with the decryption key.

### BRIEF DESCRIPTION OF THE DRAWINGS

These and further construction features of the invention will be better appreciated in the light of the ensuing description of a preferred embodiment thereof, given by way of example only with reference to the accompanying drawings wherein:
Fig. 1 is an illustration of a disk drive of a computer system having a key diskette inserted into it;
Fig. 2 is a top view of the key diskette of Fig. 1;
Fig. 3 is a view of the magnetic medium surface of the key diskette;
Fig. 4 is a block diagram illustration of a software encryption key generation system in accordance with a preferred embodiment of the present invention;
Fig. 5 is a flow chart illustration of the method for generating the software encryption key of Fig. 4;
Fig. 6 is a flow chart illustration of the diskette validation method;
Fig. 7 is a flow chart illustration of the method of generating the key from the key diskette;
Fig. 8 is a block diagram illustration of a system for encrypting software using the software encryption key of Fig. 4; and
Fig. 9 is a block diagram illustration of a system for decrypting software using the software encryption key of Fig. 4.

### DETAILED DESCRIPTION OF A PREFERRED EMBODIMENT

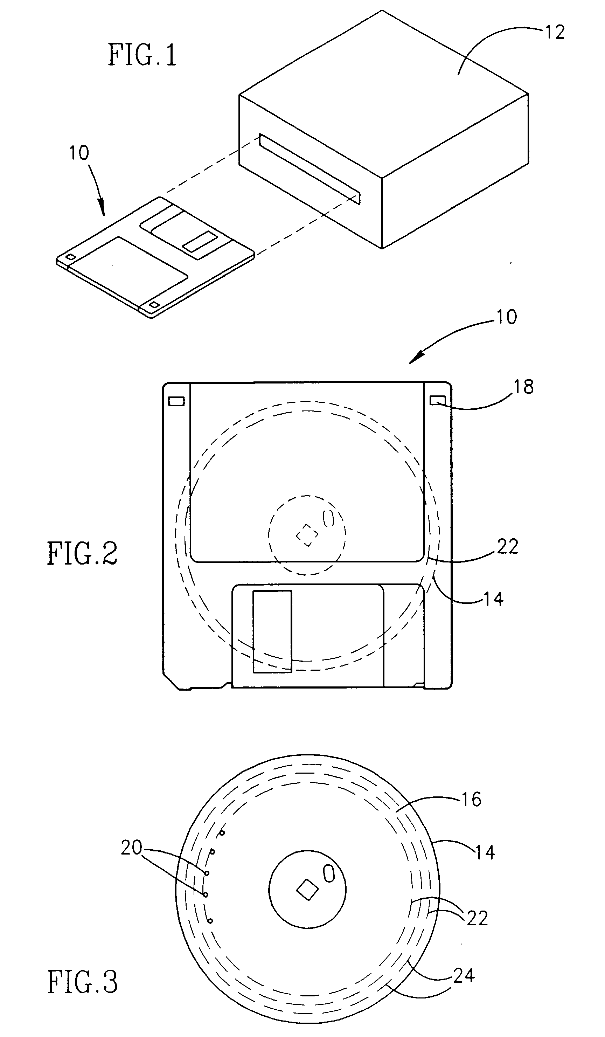

Reference is made to Figs. 1, 2 and 3. Fig. 1 illustrates a randomly accessible, removable, storage element in the form of a key diskette, generally designated **10** inserted in a disk drive **12** of a computer system. Fig. 2 is a top view of key diskette **10** and Fig. 3 illustrates the surface **14** of key diskette **10**. For the purposes of example, the system and method described hereinbelow refers to a diskette having two sides. As will be appreciated by persons knowledgeable in the art, the system and method is also appropriate for a randomly accessible, removable storage element having a single side, such as a compact disk, read only memory (CD-ROM) element.

Key diskette **10** is similar to a conventional diskette, known in the art, which generally comprises a magnetic medium **16** enclosed within a jacket **18**, wherein magnetic medium **16** comprises a plurality of concentric data tracks **22** having a plurality of sectors **24**.

As required for the present invention, diskette **10** is marked, in some way, such as by a laser operated device which accurately marks one side of the diskette without creating holes and damaging the diskette's second side. The marked sectors **20** form a pre-selected pattern. The positions of marked sectors **20** are recorded and stored by the diskette manufacturer, and are used to produce identical but uniquely marked diskettes for a specific customer. The marking of the diskette requires a high level of precision which is difficult to duplicate.

In accordance with the present invention, as detailed hereinbelow, the pattern of marked sectors **20** is encoded and the resulting encoded pattern is then encrypted utilizing a standard encryption method to produce a tailor made software encryption key.

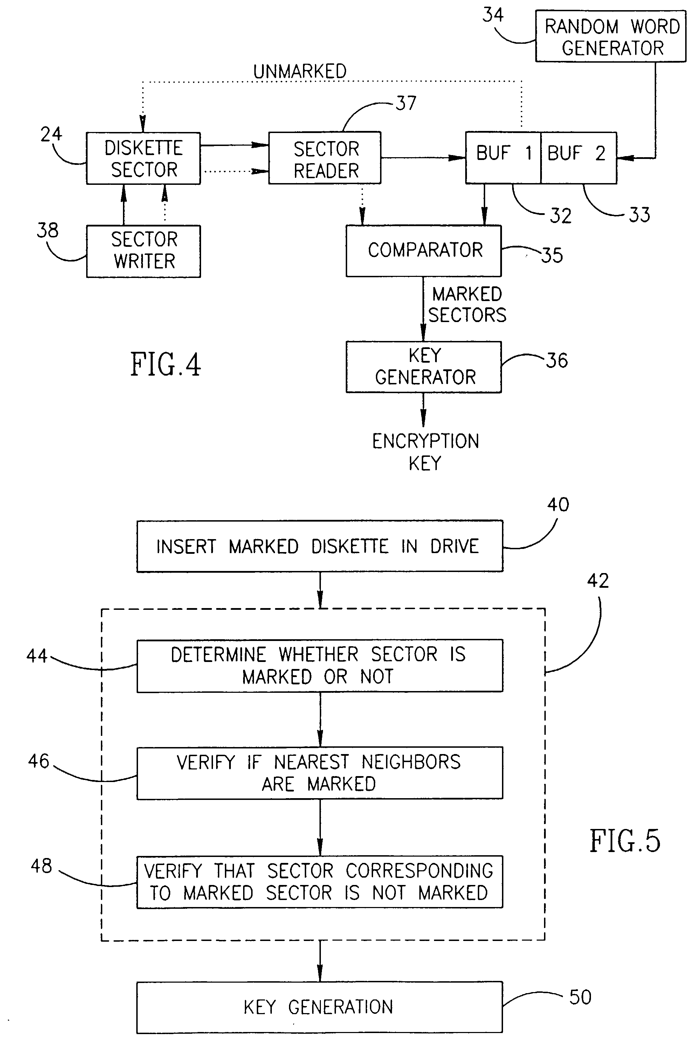

Reference is now made to Fig. 4, which illustrates a software encryption key generation system, generally designated **30**, constructed and operative in accordance with a preferred embodiment of the invention.

Software encryption key generation system **30** comprises disk drive **12**, first and second memory buffers **32** and **33**, respectively, a random word generator **34**, a sector comparer **35** and a key generator **36**.

Disk drive **12**, which is a conventional magnetic disk drive, known in the art, comprises a sector reader **37** and a sector writer **38** which respectively reads and writes data magnetically to diskette **10**. First and second memory buffers **32** and **33**, respectively, are any conventional computer memory storage device, known in the art. Random word generator **34** is any generator, known in the art, which can randomly generate data. Sector comparator **35** compares a first reading from a sector with a second reading of data from the same sector, in order to ascertain whether a particular sector is marked. Key generator **36** generates the software encryption key from the marked sectors.

A sector can often be written to even if it is corrupt. However, reading from a marked sector always generates an error. A read error may also result if a sector is faulty for some other reason. To exclude the possibility that the read error is not due to a marked sector, two separate read operations are carried out on each sector.

In operation, each sector **24**, of a pre-determined range of sectors, of the diskette is checked to ascertain whether it is marked. Firstly, a sector **24** is read by sector reader **37** and the data is stored in first memory buffer **32** (as shown by the full line). Random data (for example, a 16-bit word) is then generated by random word generator **34** and stored repeatedly in second memory buffer **33**. The random data is also written, by sector writer **37**, to the previously read sector **24**. Then the complement of the randomly generated data is stored repeatedly in second memory buffer **33**. For randomly generated data of 100110 for example, the complement of the data is 011001. Sector **24** is read again (as shown by dotted line) and the result is stored in second memory buffer **33**.

The contents of second memory buffer **33** will vary depending on whether sector **24** is marked or not. If sector **24** is unmarked, the data stored in second memory buffer **33** represents the data read during the second reading, which will match the randomly generated data written to sector **24**. In contrast, if sector **24** is marked, it will not have been possible to correctly read the entire sector a second time. The data stored in second memory buffer **33** represents the data read during the second reading, which will not match the randomly generated data written to the sector **24**.

The record of marked sectors **20** is then passed to key generator **36** which encodes the records in order to generate the software encryption key. To restore the original sector data, the data in first buffer memory **32** is written back to the sector **24** (shown by the dashed line), after the sector is tested.

Reference is now made to Fig. 5, which illustrates the method for generating the software encryption key. A diskette **10** is inserted into disk drive **12** (step **40**). Diskette **10** is first validated (step **42**), that is each sector, of a pre-determined range of sectors, of the diskette is checked to ensure that the marking conforms with pre-determined criteria. The validated key diskette is then used to generate the software encryption key (step **50**).

To validate a sector (step **42**), each sector **24** is checked to determine whether it is marked or not (step **44**). For a diskette to be valid, it needs to conform with two parameters. Firstly, to make it difficult to duplicate the diskette, the immediate neighboring sector should not be marked (step **46**). Secondly, to ensure that a hole has not been made in the diskette **10**, the corresponding sector on the other side of the diskette is checked to ensure that it is unmarked (step **48**). If either of these conditions does not exist, the diskette will not be used for key generation.

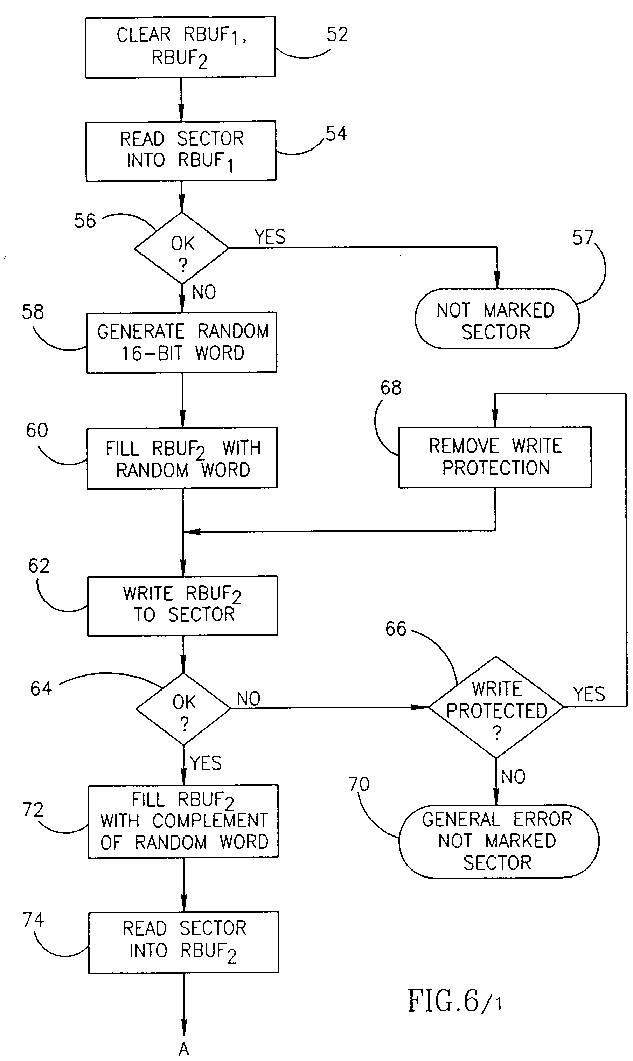

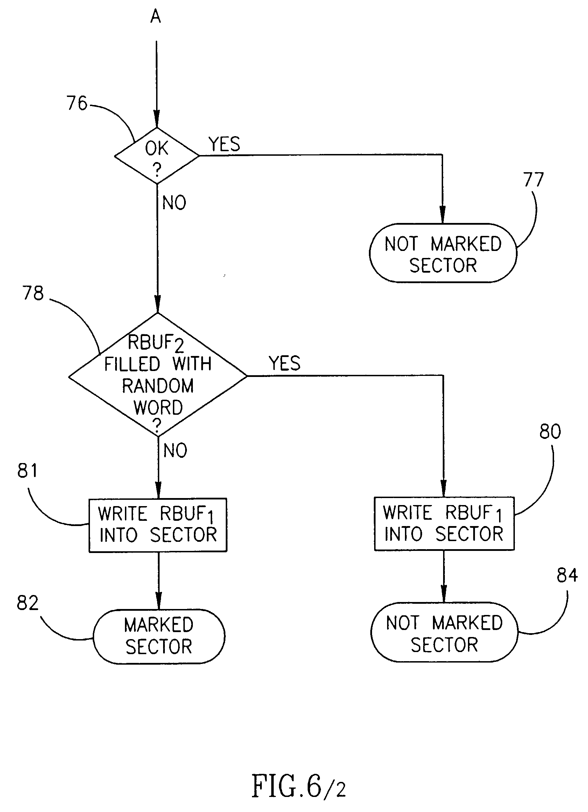

Reference is now made to Fig. 6, which illustrates the step of checking sectors (step **44**). To determine whether a sector **24** is marked, standard functions, such as BIOS functions in the case of IBM personal computers or similar, are used. First and second buffers **32** and **33**, respectively are cleared (step **52**). Sector **24** is read, using the read sector function, located at interrupt **13** hex, function 2, and the data is saved for future use by storing in first memory buffer **32** (step **54**). The read operation is checked (step **56**). If the read operation was successful, the sector is unmarked (**57**) and the operation continues with checking the next sector. However, if a read error was generated, this may be due to a general fault or a simulated marked sector. A simulated bad sector can be produced, for example, by directing the floppy disk controller to generate an incorrect checksum (CRC) for the sector data and then writing the bad checksum to the sector. By writing data to the sector a second time, the bad checksum will be replaced with a good one.

To check the reason for the read error, a random 16-bit word (in the case of IBM personal computers or similar) is generated (step **58**) and stored in second buffer **34** (step **60**). The generated 16-bit word is written to sector **24** (step **62**) using the write sector function, located at interrupt 13 hex, function 3. The success of the write operation is checked (step **64**). An unsuccessful write operation either indicates that the diskette is write protected (**66**), in which case, the write protection is removed (step **68**) and steps **60** and **62** are repeated. If the diskette is not write protected, the unsuccessful write operation is due to a general error and the sector is unmarked (**70**).

If a write error does not occur, the complement of the randomly generated data is stored in second memory buffer **33** (step **72**). Sector **24** is read again (step **74**). The success of the read operation is again checked (step **76**). A successful read operation indicates that the sector is unmarked (**77**). If the read operation is unsuccessful, the contents of second memory buffer **33** are checked (step **78**). If second memory buffer **33** contains the randomly generated data, sector **24** is not marked and the contents of first memory buffer **32** are written back to sector **24** (step **80**),. However, if second memory buffer **33** contains the complement of the randomly generated data, the results of the second read operation on sector **24** (step **74**) do not match the data written to it (step **62**) and therefore sector **24** must be a marked sector (step **82**). The contents of first memory buffer **32** are written back to sector **24** (step **81**). Steps **52** to **82** are repeated for each sector **24** of the pre-selected range of sectors, on the diskette.

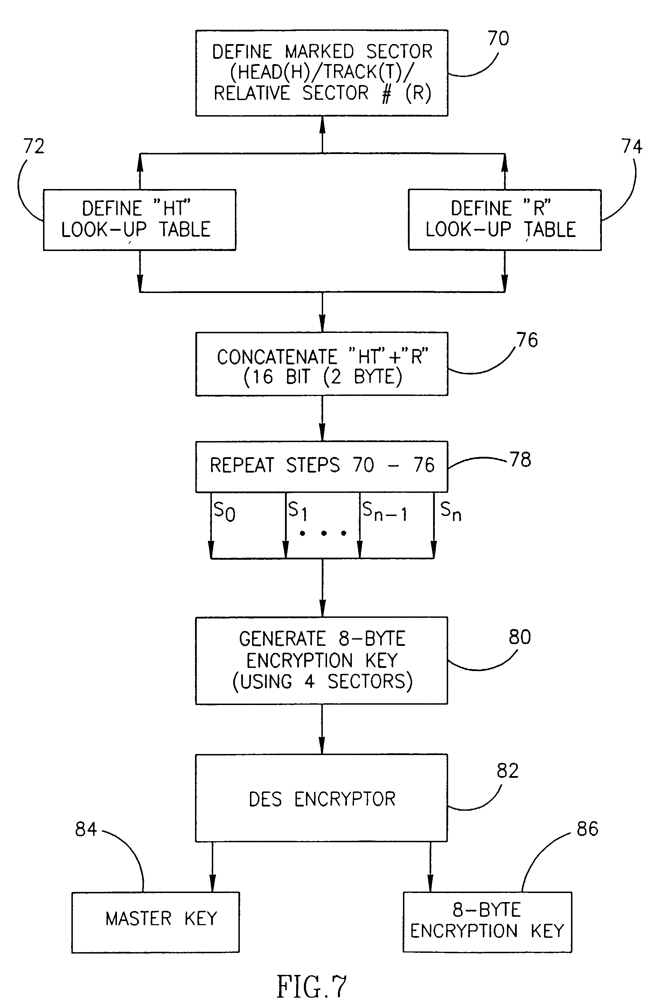

Reference is now made to Fig. 7, which illustrates the method of generating the key from the key diskette. The location of each marked sector can be defined by reference to three parameters; its head (H), track number (T) and relative sector number (R), where n is a sector number (step **70**). A marked sector Sn can be written as:Sn = (Hn, Tn, Rn).

Since a diskette can have two heads, Hn can be either 0 or 1. Generally, diskettes consist of 40 or 80 tracks and each track (Tn) is numbered from 0 (first track) to the last track (that is, 39 or 79). The number of sectors on a track can vary. Commonly, there are either 9, 15, 18 or 36 sectors per track which are numbered from 1 upwards.

Two pre-determined look-up tables are consulted. Parameters Hn and Tn are input into a first look-up table (HT-table) for each marked sector **20** (step **72**). Similarly, a second look-up table (R-table) is constructed having as input the parameter Rn for each sector **20** (step **74**). Each table returns an 8-bit value. The 8-bit values of HT and R are then concatenated to produce an 16 bit (equal to 2-bytes) value (step **76**). Steps **70** to **76** are repeated for each marked sector (step **78**).

To generate an encryption key, the values output from the two look-up tables are encrypted using the Data Encryption Standard (DES) method (steps **80** and **82**). For example, to generate an 8-byte encryption key, the 2-byte values from four sectors are concatenated together (step **80**). A master key **84** (described hereinbelow) is used together with the DES method in order to produce the encryption key **86**.

The master key **84** adds a further level of protection and may comprise any suitable protection means. However, in accordance with the present invention, in order to ensure the maximum level of protection, the master key **84** is itself an unique key, produced by and only known to the manufacturer of the marked diskettes. Thus, the encryption key **86** produced for a specific customer is unique and exclusive.

The encryption key generated, comprising a set of 8-byte strings, corresponds to and is exclusive to the marked diskette from which it has been produced. The encryption key can only be used together with the particular marked diskette which was used for the encryption.

The diskette key system, described hereinabove, uses a specially marked diskette and processing software to generate an encryption key. A software manufacturer, for example, can use the encryption key together with a DES encryption to protect his software and prevent other users from copying the software and installing it on their own computers.

In a further embodiment, a sector of a CD-ROM can be marked in a number of ways. Typically, a CD-ROM sector, having 2048 bytes, is marked by writing an invalid checksum. In order to provide a means of verifying if the sector data is valid, a checksum, usually a cyclic-redundancy-checksum (CRC), is computed from the sector data, and written to the CD-ROM together with the sector data. When the sector is read, a new CRC is computed from the sector data and compared to the stored CRC. If the CRC's are not equal, the sector data is considered invalid. An attempted read of such a sector, for example, using the Microsoft CD Extension API (MSCDEX), for example, will return a DATA_INVALID error.

An encryption key can be generated by a pattern of bad CD-ROM sectors in a manner similar to the method for diskettes, described hereinabove.

Generating a bad CD-ROM checksum is accomplished by reading an entire sector into memory in real-time, just prior to the sector being sent to the cutting laser, altering bits of the true checksum, and sending the modified sector (with the bad CRC) to the cutting laser.

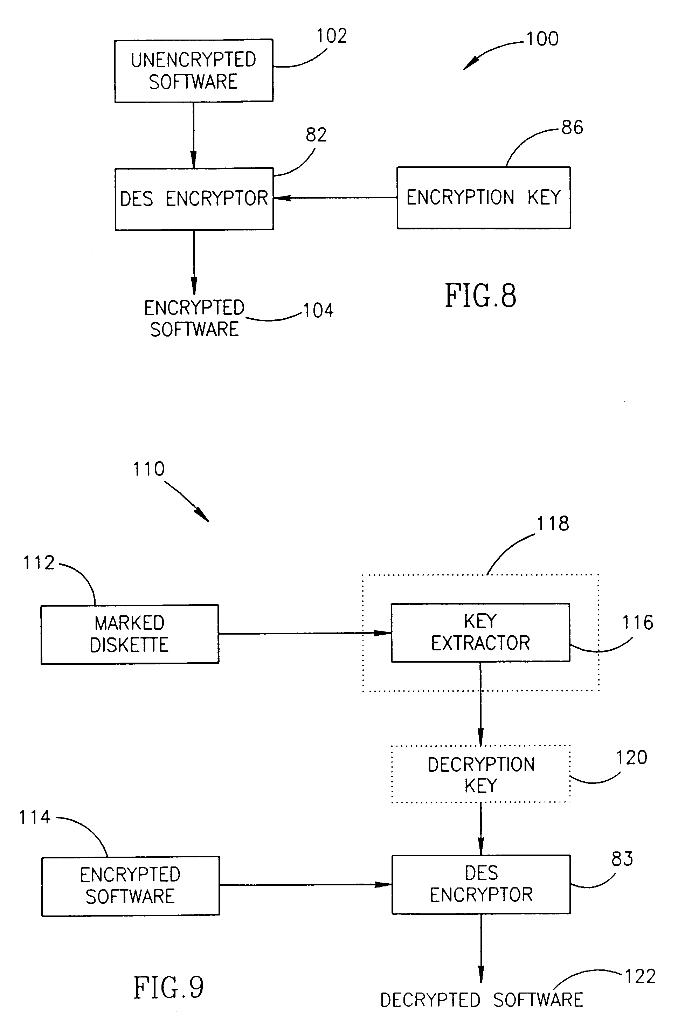

Reference is now made to Figs. 8 and 9 which are block diagram illustrations of the system for encrypting and decrypting software, respectively.

The software encryptor **100** comprises the unencrypted software **102**, an encrpytion key **86** and a DES encryptor **82**. The software manufacturer uses software encryptor **100**, that is DES encryptor **82**, known in the art, together with the encrpytion key **86**, supplied by the diskette manufacturer in order to encrypt the unencrypted software **102**. The resulting encrypted software **114** is supplied to the customer.

The software decryptor **110** comprises DES decryptor **83**, a marked diskette **112**, the encrypted software **114** and a key extractor **116**. The key extractor **116** is used to generate the decryption key **120** from the marked diskette **112**. The extracted decrpytion key **120** is then used to decrypt the encrypted software **114** to generate the decrypted software **122**.

A customer wishing to install an application receives a marked diskette **112**, the encrypted software **114** and installation software **118**. Key extractor **116** is a component of the installation software **118**. To install the software, the customer inserts marked diskette **112** into a drive of his computer system (not shown). The installation software **118** reads the marked diskette **112** and extracts a decrpytion key **120** therefrom. The installation software **118** then uses the extracted decrpytion key **120** to decrypt the encrypted software **114** and install the software application.

If a legitimate marked diskette is used by the customer, then the extracted encrpytion key **120** matches encrpytion key **86**, the decrypted software **122** will match the unencrypted software **102**, and the original software program is successfully reconstructed.

If an unmarked or incorrectly marked diskette is used, the key generated therefrom will not match the original encryption key **86**, and consequently, the decrypted software will not be the same as the original software **102**. Thus, since each installation requires a genuine marked diskette, a software manufacturer can easily protect his software from unauthorized copying..

As will be appreciated by persons knowledgeable in the art, the various embodiments hereinabove referred are given by way of example only and do not in any way limit the present invention.

Those skilled in the art will be readily appreciate that various changes, modifications and variations may be applied to the preferred embodiments without departing from the scope of the invention as defined in and by the appended claims.

## Claims

1. A system for encrypting data comprising:
a. a marked, randomly accessible, removable, data storage element having a pattern of marked sectors formed thereon;
b. a key generating unit for generating an encryption key from said marked randomly accessible, removable, data storage element; and
c. an encoding unit for encoding said data in accordance with said encryption key.

2. A system for decrypting encoded data comprising:
a. a key generating unit for generating an encryption key from a pattern of marked sectors on a marked, randomly accessible,
removable, data storage element; and b. a decryptor for decrypting said encoded data with said encryption key.

3. A system according to any of claims 1 - 2 wherein said randomly accessible, removable, data storage element is a diskette.

4. A system according to any of claims 1 - 2 wherein said randomly accessible, removable, data storage element is a compact disk, read only memory (CD-ROM) element.

5. A system according to any of the previous claims wherein said key generating unit comprises:
a. a disk drive for reading from and writing to said randomly accessible, removable, data storage element;
b. a first memory buffer for storing the contents of a first set of data read by said reading means from at least one of said sectors;
c. a random word generator for randomly generating data;
d. a second memory buffer for storing the contents of said randomly generated data and the complement of said randomly generated data;
e. a sector comparator for comparing the results of a first reading of said sector after writing said randomly generated data with the results of a second reading of said sector after writing said complement of said randomly generated data for determining whether said at least one of said sectors is one of said marked sectors and for producing said pattern of marked sectors; and
f. a key generator for generating said encryption key from said pattern of marked sectors.

6. A method for encrypting data comprising the steps of:
a. generating an encryption key from a pattern of marked sectors on a marked, randomly accessible, removable, data storage element containing a plurality of sectors; and
b. encrypting the data in accordance with said encryption key.

7. A method for decrypting encoded data comprising the steps of :
a. generating an encryption key from a pattern of marked sectors on a marked, randomly accessible, removable, data storage element having two sides, each of said two sides containing a plurality of sectors; and
b. decrypting said encoded data with said encryption key.

8. A method according to any of claims 6 - 7 wherein said step of generating an encryption key comprises the steps of:
a. validating said marked, randomly accessible, removable, data storage element;
b. storing the location of said marked sectors in a memory storage device;
c. producing a pattern from said marked sectors; and
d. generating said encryption key from said pattern of marked sectors.

9. A method according to any of claims 6 - 8 wherein said randomly accessible, removable, data storage element is a diskette.

10. A method according to claim 9 wherein said step of validating comprises the steps of:
a. determining whether each of said plurality of sectors of said randomly accessible, removable, data storage element is marked or unmarked; and
b. for each marked sector:
i. verifying that the nearest neighbors of said marked sectors are unmarked; and
ii. verifying that the corresponding sector on the other side of said diskette to said marked sector is unmarked.

11. A method according to claim 9 and wherein said step of determining comprises the steps of:
a. first reading each of said plurality of sectors and storing the read data into a first memory buffer;
b. generating random data and writing said random generated data to said read sector and storing said randomly generated data to a second memory buffer;
c. storing the complement of said random generated data to said second memory buffer;
d. second reading of said read sector;
e. comparing the contents of said second memory buffers with said randomly generated data; and
f. if said second memory buffer does not match said randomly generated data, identifying said sector as a marked sector.

12. A system for protecting software comprising:
a. a key generating unit for generating an encryption key from a pattern of marked sectors on a marked, randomly accessible, removable, data storage element;
b. an encoding unit for encoding said software in accordance with said encryption key;
c. a key extractor for generating a decryption key from said pattern of marked sectors on said marked, randomly
accessible, removable, data storage element; and d. a decryptor for decrypting said software using said decryption key.

13. A method for protecting software comprising the steps of:
a. generating an encryption key from a pattern of marked sectors on a marked, randomly accessible, removable, data storage element containing a plurality of sectors;
b. encrypting the software in accordance with said encryption key;
c. generating a decryption key from said pattern of marked sectors on said marked, randomly accessible, removable, data storage element; and
d. decrypting said software with said decryption key.
